Europäisches Patentamt

European Patent Office

Office européen des brevets

(19)

(11) Veröffentlichungsnummer: **0 006 417**
**A1**

(12) # EUROPÄISCHE PATENTANMELDUNG

(21) Anmeldenummer: 79100338.7

(22) Anmeldetag: 06.02.79

(51) Int. Cl.³: **B 23 B 51/02**

(30) Priorität: 27.06.78 DE 2828644

(43) Veröffentlichungstag der Anmeldung: 09.01.80
Patentblatt 80/1

(84) Benannte Vertragsstaaten: **BE CH FR GB IT LU NL SE**

(71) Anmelder: **Breiting, Johannes, Kurfürstendamm 101,
D-1000 Berlin 31 (DE)**

(72) Erfinder: **Breiting, Johannes, Kurfürstendamm 101,
D-1000 Berlin 31 (DE)**

(74) Vertreter: **Diehl, Paul, Lietzenburger Strasse 53,
D-1000 Berlin 15 (DE)**

(54) **Hartmetallbestückter Spiralbohrer.**

(57) Ein hartmetallbestückter Bohrer, der sich zum Bohren sehr voneinander verschiedener Materialien, wie Metalle, Glas, Keramik, Beton u. dgl., eignet, wird so angeschliffen, dass sein Spitzenwinkel Delta im Bereich von 120°-125° und sein Freiwinkel Alpha im Bereich von 10°-15° liegt. Damit werden vorzügliche Bohrleistungen, auch hinsichtlich der Qualität der fertigen Bohrungen, erzielt. Der Bohrer wird weiterhin im Schaft oberflächengehärtet und das die Schneide bildende Hartmetallplättchen mittels eines noch bei ca. 1000°C hitzebeständigen Hartlotes befestigt. Weiterhin ist dieser Bohrer mit mindestens einer Anlagefläche (3) ausgestattet, die ein vorgegebenes Lageverhältnis zur Auflagefläche (5) des Hartmetallplättchens (2) hat und ein einfaches Einspannen des Bohrers in die Schleifmaschine gewährleistet.

EP 0 006 417 A1

0006417

## Hartmetallbestückter Spiralbohrer

Die Erfindung betrifft einen hartmetallbestückten Spiralbohrer, wie er bisher zur Bearbeitung von Grauguß, NE-Metallen, Glas, Porzellan, Gestein u.dgl. eingesetzt wurde. Derartige Spiralbohrer haben bisher, je nachdem, welches Material zu bohren ist, verschiedene Spitzen- und Freiwinkel.

Der Erfindung liegt die Aufgabe zugrunde, einen hartmetallbestückten Spiralbohrer zu schaffen, der als Allzweckbohrer sowohl Beton als auch den häufig im Beton zu Armierungszwecken verankerten Baustahl einwandfrei durchdringt. Des weiteren liegt der Erfindung die Aufgabe zugrunde, einen derartigen Spiralbohrer besonders einfach scharf schleifbar zu gestalten.

Erfindungsgemäß sind deshalb an dem Bohrer Schneidenwinkel in folgenden Bereichen angeschliffen:

$$120° < \delta \leq 125° \quad \text{(Spitzenwinkel)}$$
$$10° < \alpha < 15° \quad \text{(Freiwinkel)}.$$

Es hat sich gezeigt, daß Spiralbohrer mit diesen Schneidenwinkeln universell sowohl zum Bohren von Stählen als auch von Beton, Glas, Keramik u.dgl. verwendbar sind, wobei selbstverständlich die Drehzahl entsprechend dem zu bearbeitenden Material gewählt werden muß. Beton mit Armierung kann mit einem erfindungsgemäßen Spiralbohrer bei einer Drehzahl von etwa 2000 U/min gut bearbeitet werden; wird das Schlagbohren angewendet, so arbeitet man zweckmäßig mit einer Drehzahl von etwa 1000 U/min.

Eine Steigerung der Zerspanungsleistung des erfindungsgemäßen Spiralbohrers wird nach einem weiteren Erfindungsgedanken dadurch erreicht, daß der Bohrerschaft oberflächengehärtet wird. Die Härte soll dabei zwischen 40 und 55 $R_C$ liegen. Diese Oberflächenhärtung hat eine Erhöhung der Torsionssteifigkeit des Bohrerschaftes und damit eine Verringerung der Schwingungen des Bohrers während des Bohrvorganges zur Folge. Weiterhin wird durch die Oberflächenhärtung die Wärmedehnung des Bohrers im Bereich des Hartmetallplättchens herabgesetzt und derjenigen des Hartmetallplättchens angenähert, so daß schädliche Spannungen innerhalb der Lötstelle, wie sie aus stark unterschiedlichen Wärmedehnungen des Hartmetalls und des Bohrerschaftmaterials resultieren, abgebaut werden. Dem Ablösen des Hartmetallplättchens wird auf diese Weise entgegengewirkt.

Da wegen der besonders hohen Bohrerleistung des erfindungsgemäßen Spiralbohrers an den Bohrerschneiden sehr hohe Temperaturen auftreten, wird in Ausgestaltung der Erfindung zur Befestigung des Hartmetallplättchens an dem Bohrerschaft ein Hartlot verwendet, dessen Hitzebeständigkeit ca. 1000°C beträgt, so daß ein Auslöten des Hartmetallplättchens nicht eintreten kann.

In Ausgestaltung des erfindungsgemäßen hartmetallbestückten Bohrers erhält dieser mindestens eine Auflagefläche für eine Haltevorrichtung am Ende seines Bohrerschaftes, die in einem vorgegebenen genauen Lageverhältnis zur Auflagefläche des Hartmetallplättchens steht.

Diese Maßnahme erhöht den Anwendungswert des erfindungsgemäßen Bohrers erheblich, weil es bekanntlich notwendig ist, das Hartmetallplättchen eines Spiralbohrers nach einer gewissen Verwendungszeit nachzuschleifen, um eine einwandfreie Schneide zu gewinnen. Zu diesem Zweck ist es erforderlich, den Spiralbohrer in eine entsprechende Schleifmaschine einzuspannen. Als einzige Bezugsfläche für die Ausrichtung des Spiralbohrers steht dabei die Spanfläche des Hartmetallplättchens zur Verfügung. Das Einspannen eines Spiralbohrers zum Scharfschleifen gestaltet sich deshalb umständlich, weil der Spiralbohrer erst dann festgespannt werden darf, wenn die Spanfläche parallel zur Auflagefläche des Spiralbohrers verläuft.

Es braucht jetzt lediglich ein mit der erfindungsgemäß vorgesehenen Auflagefläche am Ende des Bohrerschaftes des Spiralbohrers zusammenwirkendes Spannelement, beispielsweise eine einfache Klemmplatte, vorgesehen zu werden, die nach der Anlage auf der Auflagefläche des Bohrerschaftes eine selbsttätige Ausrichtung der Spannfläche des Hartmetallplättchens, die ihrerseits stets parallel zur Auflagefläche des Hartmetallplättchens verläuft, herbeiführt.

In Ausgestaltung der Erfindung wird die Aufnahmefläche am Ende des Bohrerschaftes parallel zu derjenigen des Hartmetallplättchens gelegt und damit die übliche Ausgangslage des Spiralbohrers für den Scharfschliff herbeigeführt.

Nach einem weiteren Erfindungsgedanken ist es besonders vorteilhaft, in das Ende des Bohrerschaftes einen Schlitz einzufräsen, dessen Hauptebene zu der Auflagefläche des Hartmetallplättchens verläuft. Dies erlaubt eine besonders einfache Einspannvorrichtung für den Spiralbohrer, da dieser jetzt lediglich mit seinem Schlitz über einen stegförmigen Vorsprung des verwendeten Supports geschoben zu werden braucht, der den Spiralbohrer mit ausreichender Lagegenauigkeit fixiert. Die notwendige weitere Festspannung des Spiralbohrers erfolgt in üblicher Weise.

Die letztgenannte Ausführungsform des erfindungsgemäßen Spiralbohrers erweist sich auch bei der Herstellung des hartmetallbestückten Spiralbohrers als besonders vorteilhaft, weil der Schlitz am Ende des Bohrerschaftes auf der gleichen Fräsmaschine, mit der der Schlitz zur Aufnahme des Hartmetallplättchens an der Spitze des Bohrers gefräst wird, in praktisch der gleichen Einspannung nach einer lediglich um genau 180° erfolgenden Schwenkung des Spiralbohrers gefräst werden kann, wodurch die Parallelität zwischen der Spanfläche des später einzulötenden Hartmetallplättchens und der Hauptebene des solcherart am Bohrerschaftende eingefrästen Schlitzes zwangsläufig gewährleistet ist.

Statt dessen kann man in einer Abwandlung der Erfindung am Ende des Bohrerschaftes eine beliebige erhabene oder versenkte Aufnahme zum Einspannen des Spiralbohrers vorsehen. Eine derartige Aufnahme kann beispielsweise in einem prismatischen Ansatz am Ende des Bohrerschaftes, wie einem Sechs- oder Dreikant,

0006417

bestehen. Desgleichen könnte die Aufnahme als Innensechskant oder Innendreikant ausgebildet sein. In jedem Falle ergeben sich bequem zu handhabende Einspannverhältnisse, und die gewünschte Lagefixierung der Hartmetallschneide in der Schleifmaschine ergibt sich automatisch nach erfolgtem Einspannen des Spiralbohrers ohne jeden weiteren Maßvorgang.

In der Zeichnung ist ein Ausführungsbeispiel der Erfindung dargestellt, an Hand dessen die Erfindung im folgenden näher erläutert sei. Es zeigen:

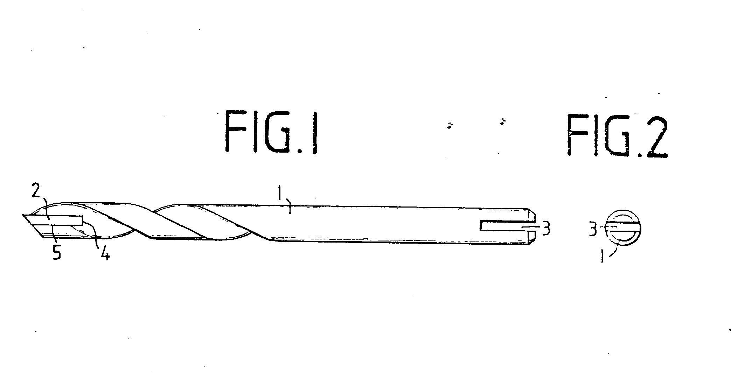

Fig. 1 die Seitenansicht des in erfindungsgemäßer Weise ausgebildeten Spiralbohrers und

Fig. 2 die Stirnansicht auf das rückwärtige Ende des Bohrerschaftes.

Am vorderen Ende des Bohrerschaftes 1 ist das Hartmetallplättchen 2 in einen zu diesem Zweck dort eingefrästen Schlitz 3 eingesetzt und in üblicher Weise hart verlötet. Nach der Erfindung ist am hinteren Ende des Bohrerschaftes 1 ein Schlitz 4 eingefräst, dessen Hauptebene parallel zur Aufnahmefläche 5 verläuft.

0006417

Ansprüche:

1. Hartmetallbestückter Spiralbohrer, g e k e n n - z e i c h n e t durch folgende Schneidenwinkel- bereiche:

$$120° < \delta \leq 125° \text{ (Spitzenwinkel)}$$
$$10° < \alpha \leq 15° \text{ (Freiwinkel)}.$$

2. Bohrer nach Anspruch 1, dadurch g e k e n n - z e i c h n e t , daß der Bohrerschaft oberflä- chengehärtet ist.

3. Bohrer nach Anspruch 1 und 2, dadurch g e - k e n n z e i c h n e t , daß das Hartmetall- plättchen mittels eines Hartlotes an dem Bohrerschaft befestigt ist, das eine Hitzebeständigkeit von ca. 1000°C hat.

4. Bohrer nach einem der Ansprüche 1 bis 3, g e - k e n n z e i c h n e t durch mindestens eine Auflagefläche (5) für eine Haltevorrichtung am Ende des Bohrerschaftes (1), die in einem vorgegebenen Lageverhältnis zur Auflagefläche (5) des Hartmetallplättchens (2) steht.

5. Bohrer nach einem der Ansprüche 1 bis 4, dadurch g e k e n n z e i c h n e t , daß die Aufnahme- fläche (5) am Ende des Bohrerschaftes (1) parallel zu derjenigen (5) des Hartmetallplättchens (2) verläuft.

6. Bohrer nach einem der Ansprüche 1 bis 5, dadurch g e k e n n z e i c h n e t , daß in das Ende des Bohrerschaftes (1) ein Schlitz (4) eingefräst

- 2 -

0006417

ist, dessen Hauptebene parallel zu der Auflagefläche (5) des Hartmetallplättchens (2) verläuft.

7. Bohrer nach einem der Ansprüche 1 bis 6, dadurch
g e k e n n z e i c h n e t , daß am Ende des
Bohrerschaftes (1) eine prismatische erhabene
oder versenkte Aufnahme zum Einspannen des Spiralbohrers in eine Halterung zwecks Scharfschleifens vorgesehen ist.

0006417

FIG.1 FIG.2

| Kategorie | Kennzeichnung des Dokuments mit Angabe, soweit erforderlich, der maßgeblichen Teile | betrifft Anspruch |
|-----------|-----------------------------------------------------------------|---------|
| X | <u>DE - A - 2 105 664</u> (REINHOLDT)<br>* Ansprüche 2,3; Figuren 1,2 * | 1,4,5 |
|  | -- |  |
|  | <u>US - A - 1 977 845</u> (EMMONS)<br>* Seite 2, Zeilen 78-84,122-129 * | 2,3 |
|  | -- |  |
|  | <u>US - A - 1.887 373</u> (EMMONS)<br>* Seite 2, Zeilen 110-130; Seite 3, Zeilen 1-3 * | 2 |
|  | -- |  |
|  | <u>DE - C - 832 373</u> (ROHM)<br>* Seite 2, Zeilen 62-64; Figur 1 * | 6,7 |
|  | -- |  |
|  | <u>GB - A - 29 964 AD 1909</u> (OSBORN)<br>* Seite 1, Zeilen 32-34; Figur 2 * | 6,7 |
|  | -- |  |
| A | <u>DE - C - 829 568</u> (SIEMENS) |  |
| A | <u>FR - A - 1 118 255</u> (GUILLET) |  |
|  | ---- |  |

**EINSCHLÄGIGE DOKUMENTE**

KLASSIFIKATION DER ANMELDUNG (Int. Cl.)

B 23 B 51/02

RECHERCHIERTE SACHGEBIETE (Int. Cl.)

B 23 B 51/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt

| Recherchenort | Abschlußdatum der Recherche | Prüfer |
|---------------|-----------------------------|--------|
| Den Haag | 02-10-1979 | BOGAERT |

EPA form 1503.1   06.78